# EUROPEAN PATENT SPECIFICATION

(11) **EP 1 257 912 B1**
(45) Date of publication and mention of the grant of the patent: **19.08.2009**
(21) Application number: 01900915.8
(22) Date of filing: 03.01.2001
(51) Int. Cl.: G06F 9/312

(54) **METHOD AND APPARATUS FOR IMPROVED COMPUTER LOAD AND STORE OPERATIONS**
VERFAHREN UND VORRICHTUNG FÜR VERBESSERTE COMPUTERLADE- UND SPEICHEROPERATIONEN
PROCEDE ET DISPOSITIF PERMETTANT D'AMELIORER LES OPERATIONS DE CHARGEMENT ET D'ENREGISTREMENT SUR ORDINATEUR

(30) Priority: 18.01.2000 US 176937 P; 31.07.2000 US 629805
(43) Date of publication of application: 20.11.2002
(73) Proprietor: MIPS Technologies, Inc., Mountain View, CA 94043-1353 (US)
(72) Inventor: NEMIROVSKY, Mario, Saratoga, CA 95070 (US); MUSOLL, Enrique, San Jose, CA 95139 (US); SANKAR, Narendra, Campbell, CA 95008 (US); MELVIN, Stephen, San Francisco, CA 94114 (US)
(74) Representative: O'Connell, David Christopher
(86) International application number: PCT/US2001/000413
(87) International publication number: WO 2001/053934

(56) References cited:
- EP-A2- 0 764 900
- GB-A- 2 321 984
- US-A- 5 390 307
- US-A- 5 511 210
- US-A- 5 649 144
- US-A- 6 119 203
- "PARALLEL LONG MOVE INSTRUCTION" IBM TECHNICAL DISCLOSURE BULLETIN, IBM CORP. NEW YORK, US, vol. 33, no. 10A, 1 March 1991 (1991-03-01), pages 21-22, XP000109942 ISSN: 0018-8689
- PLANT J W ET AL: "DATA LENGTH CALCULATION HARDWARE" IBM TECHNICAL DISCLOSURE BULLETIN, IBM CORP. NEW YORK, US, vol. 19, no. 1, 1 June 1976 (1976-06-01), pages 55-56, XP002333145 ISSN: 0018-8689
- YAMAMOTO ET AL.: 'Performance Estimation of Multistreamed, Superscalar Processors' IEEE 1994, pages 195 - 204, XP002939241
- DONALSON ET AL.: 'DISC: Dynamic Instruction Stream Computer An Evaluation of Performance' IEEE 1993, pages 448 - 456, XP002939240

## Description

### Field of the Invention

The present invention is in the field of digital processing and pertains more particularly to apparatus and methods for loading and storing data entities in computer operations.

### Background of the Invention

The present invention is in the area of CPU operations in executing instructions from software. As is known in the art there are many kinds of instruction set architectures (ISA), and certain architectures have become favored in many computer operations. One of those architectures is the well-known MIPS ISA, and the MIPS ISA is used in the present specification in several examples. The invention, however, is not limited to MIPS ISA.

One of the necessary operations in computer processes when executing instructions is moving data entities between general-purpose or cache memory and register files in a PU where the data is readily accessible. When more than one data entity must be loaded or stored before execution can commence or continue, several instructions are needed in a conventional instruction set architecture. In applications that need to access data the present inventors have discovered that it would be desirable to have a single instruction, that could load or store data entities that are related in a known pattern, and that a single instruction capable of such operation would significantly improve the speed and efficiency of many computer operations.

What is therefore clearly needed is a method and apparatus comprising a single instruction for indicating data entities having a known positional relationship in memory, and for loading or storing a series of such data entities as a result of executing the single instruction.

EP 0764900 discloses a block transfer of data from a plurality of registers to consecutive areas in memory, and from consecutive areas in memory to a plurality of registers.

### Summary of the Invention

Aspects of the present invention may be found in the appendent independent claims, to which reference should now be made. Embodiments of the present invention, may be found in the appendent dependent claims.

In a first aspect of the invention, in computer operations, a method for selecting data entities from a memory and writing the data entities to a register file is provided, comprising steps of (a) consulting a first map of entities to copy relative to a first address; (b) selecting and reading those entities indicated by the map; (c) consulting a second map of positions to write the entities copied from the memory, relative to a first register; and (d) writing the entities to the register file according to the second map. In preferred embodiments the steps fellow from a Masked Load instruction implemented according to an instruction set architecture (ISA). Also in preferred embodiments the ISA is MIPS. Also in preferred embodiments arguments of the Masked Load instruction indicate a beginning memory address for positioning a mask, a mask number to be used, and a first register where to begin writing data entities in the register file. In some embodiments the first and second maps are implemented as bit strings, wherein the position of bits in the string indicate the positions for data entities to be selected from memory, and the registers to which data entities are to be written.

In another aspect of the invention a method for selecting data entities from a register file and writing the data entities to a memory is provided, comprising steps of (a) consulting a first map of entities to read relative to the first register; (b) selecting and reading those entities indicated by the map; (c) consulting a second map of positions to write the entities read from the register file, relative to the first address; and (d) writing the entities to the memory file according to the second map- In preferred embodiments the steps follow from a Masked Store instruction implemented according to an instruction set architecture (ISA), and the ISA may be MIPS. Also in preferred embodiments arguments of the Masked Store instruction indicate a beginning register for positioning a mask, a mask a number to be used, and a first register where to begin writing data entities in the memory. In some embodiments the first and second maps are implemented as bit strings, wherein the position of bits in the string indicate the positions for data entities to be read, and the registers to which data entities are to be written.

In still another aspect a Masked Load instruction is provided comprising an indication of the instruction; a first argument indicating a first address in a memory at which to position a mask to indicate data entities to be read; a second argument indicating a first register in a register file beginning at which to write the data entities read from the memory and a third argument indicating a mask number to be used to select the data entities to be read and written.

In still another aspect a Masked Store instruction is provided comprising an indication of the instruction; a first argument indicating a first register in a register file at which to position a mask to indicate data entities to be read; a second argument indicating a first address in a memory beginning at which to write the data entities read from the register file; and a third argument indicating a mask number to be used to select the data entities to be copied and written.

In another aspect a computing system is provided composing a CPU; a memory; and a register file. The CPU, in loading data entities from the memory into the register filereads data entities according to a pre-determined pattern relative to a first address, and writes the data entities into register of the register file in a predetermined pattern relative to a first register. In preferred embodiments the loading of data entities from memory into the register file follows from a Masked Load instruction implemented according to an instruction set architecture (ISA) and executed by the CPU, and the ISA may be MIPS. In some embodiments arguments of the Masked Load instruction indicate a beginning memory address from which to read data entities, a first register in the register file beginning at which to write the data entities, and a Mask Number indicating a stored mask to be employed to indicate the relative position in the memory and register file for reading a writing data entities. Further, the stored masks may be implemented as two bit-string vectors, a first vector indicating which data entities relative to the first address to read, and the second indicating into which registers relative to the first register to write the data entities.

In still another aspect a computing system is provided comprising a CPU; a memory; and a register file. In the system the CPU, in storing data entities into the memory from the register file reads data entities from the register file according to a pre-determined pattern, and writes the data entities into addressed locations in memory also according to a pre-determined pattern, beginning at a first address. In preferred embodiments the storing of data entities from the register file into memory follows from a Masked Store instruction implemented according to an instruction set architecture (ISA) and executed by the CPU, and the ISA may be MIPS. In preferred embodiments arguments of the Masked Load instruction indicate a beginning memory address from which, to read data entities, a first register in the register file beginning at which to write the data entities, and a Mask Number indicating a stored mask to be employed to indicate the relative positions in the memory and register file for reading and writing the data entities. In some embodiments the stored masks are implemented as two bit-string vectors, a first vector indicating which data entities relative to the first register to read, and the second indicating into which registers relative to the first address to write the data entities.

In one embodiment a dynamic multistreaming (DMS) processor is provided, comprising a first plurality *k* of individual stream, and a second plurality *m* of masks or mask sets. Individual masks or masks sets of the second plurality *m* are dedicated to exclusive use of individual ones of the first plurality of *k* streams for performing Masked Load and/or Masked Store operations. In preferred embodiments individual masks or mask sets are amendable only by the stream to which the individual mask or mask sets are dedicates.

In another embodiment a dynamic multistreaming (DMS) processor system is provided, comprising a plurality *k* of individual streams, a set of masks or mask sets for use in performing Masked Load and Masked Store operations, wherein multiple data entities are loaded or stored as a result of executing a single instruction, and according to the masks, a cache memory, and a system memory. The system is characterized in that the system, in performing a Masked Load or a Masked Store operation transfers data entities directly between the system memory and one or more register files.

In embodiments of the invention taught in enabling detail below, for the first time methods and apparatus are provided for load and store operations in computer systems wherein multiple data entities may be read and written according to a single instruction, saving many cycles in execution, and data entities may be selected for reading and writing according to pre-stored position masks.

### Brief Description of the Drawings

Fig. 1A is a schematic diagram of a memory and a register file illustrating a Stream Load operation according to an example.
   Fig. 1B is a schematic diagram of a memory and a register file illustrating a Stream Store operation according to an example.
Fig. 2A is a schematic diagram of a memory and a register file illustrating a Masked Load operation according to an embodiment of the present invention.
Fig. 2B illustrates an exemplary mask according to an embodiment of the present invention.
Fig. 2C illustrates a set of masks according to an embodiment of the present invention.
Fig. 3A illustrates a mask comprising submasks implemented as vectors according to an embodiment of the invention.
Fig. 3B illustrates a memory and a register file in masked operations according to an embodiment of the invention.

### Description of the Preferred Embodiments

As was described briefly above, there exist in the technical field of computer operations a number of different instruction set architectures (ISA). An instruction set architecture, generally speaking, is the arrangement of bits and sets of bits in a binary word that a CPU interprets as an instruction. The well-known MIPS ISA is the architecture used by the present Inventors in implementing the present invention in a preferred embodiment, but the invention is certainly not limited to the MIPS ISA. For this reason the specific use of portions of an instruction word as known in MIPS architecture will not be described in detail herein. It is well-known that the MIPS architecture provides unused op-codes that can be used to implement new instructions, and the present inventors, in the MIPS preferred embodiment, have taken advantage of this feature.

Because the invention will apply to conceivably any ISA, the inventors will specify and describe the instructions that initiate new and non-obvious functions in the following manner:
***Instruction A, B, C***
where A, B, and C are arguments defining parameters for functions to be performed in executing the instruction.

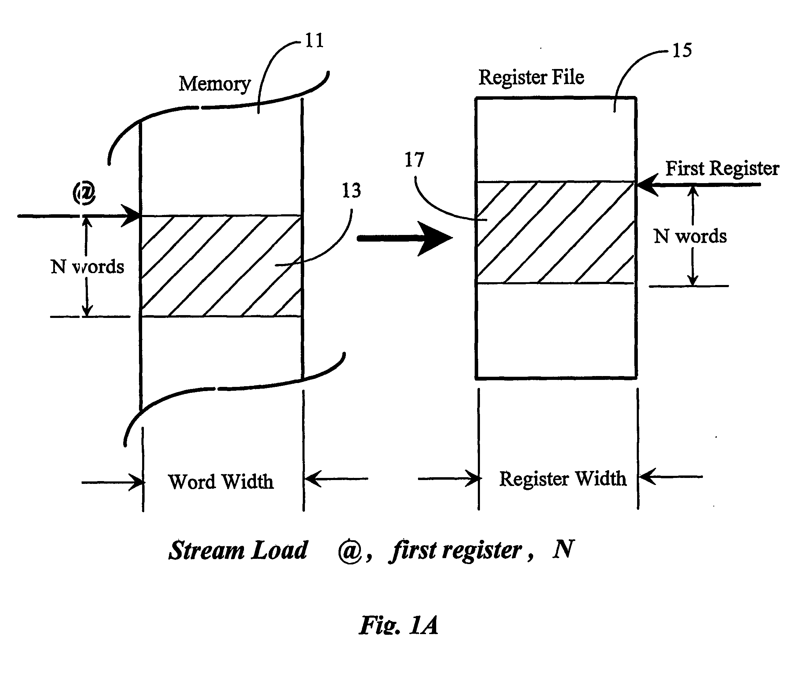

Fig. 1A is a schematic diagram illustrating a memory 11, which may be any memory, such as a cache memory or a system memory from which a CPU may fetch data, and a register file 15. Memory 11 has a Word Width, which in a preferred embodiment is 32 bits, and register file 15 similarly has a register width. The word width and the register width are preferably the same, but may differ in different embodiments of the invention.

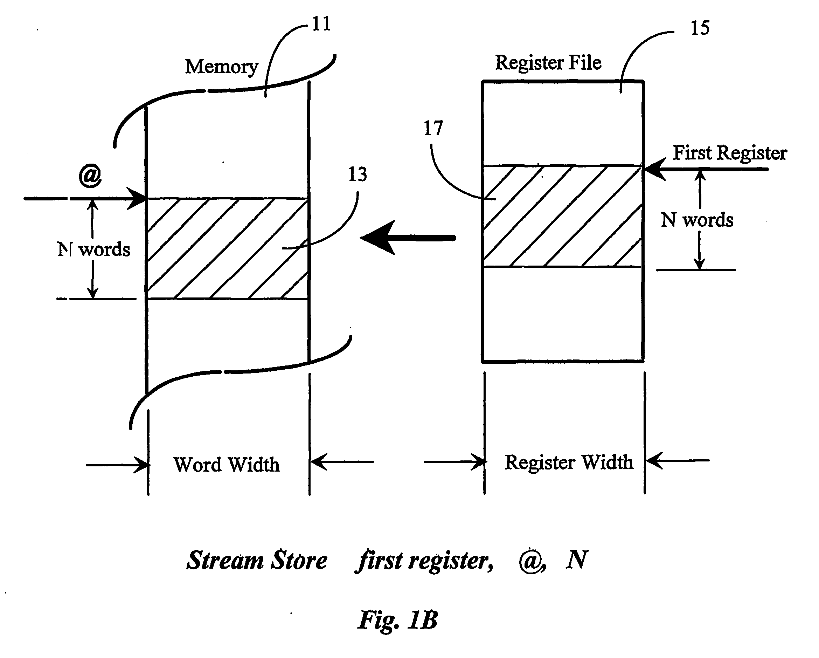

Below the schematic of memory and register file in Fig. 1 there is a logical structure for a Stream Load instruction according to an example. In the instruction structure there is an instruction opcode (for Stream Load), and three arguments, being a first argument @, a second argument "first register, and a third argument "N". Referring to the diagram, when the CPU executes this instruction, it knows from the instruction opcode what the order of operations is to be, taking words from memory 11 and writing these words into register file 15. The arguments provide the parameters.

In the example shown the CPU will read N consecutive words, beginning at address @ in memory 11, shown in Fig. 1A as words 13 in the shaded area, and will write those N words in the same order to register file 15, beginning at register "first register" providing in the register file the block of words 17.

In alternative examples, because the width of a word in memory may differ from the width of a register in the register file, words selected from memory may affect more than a single register, or may not fill a register. If the memory word, for example, is twice the register width, one memory word will fill two consecutive registers, and a selected number of memory words will fill twice that number of registers. On the other hand, if a memory word is one-half the register width it will take two memory words to fill a single register.

Fig. 1B is a schematic diagram similar to Fig. 1A, but depicting a companion Stream Store instruction, wherein the CPU, executing the instruction, will read N consecutive words (words 17) from register file 15, beginning at register "first register", and will write those N words in the same order to memory 11 beginning at address @ defined in the arguments, providing words 13.

The new instructions defined herein have important application in several instances, one of which is in application of multi-streaming processors to processing packets in network packet routing. These instructions, however, will find many other uses in use of virtually any sort of processor in a wide range of applications.

In packet processing, many packets have identical structure, and it is necessary, once a packet is brought into a router and stored in a memory such as memory 11, to load certain header fields into a register file to be processed according to certain rules. As the structure is known, bytes that comprise the header may be stored in memory consecutively, the arguments of the new Stream Load and Stream Store instructions may be structured to load all of the necessary data for a packet to a register file for processing, and to store registers after processing. It may, of course, be the same or different registers that are stored as the registers that are used in Load. There are similarly many other potential applications for Stream Load and Stream Store, which will improve computer operations in many instances.

In an embodiment of the present invention the inventors have determined the functionality of the invention may be significantly enhanced by structuring new commands to load and store multiple words without a limitation that the words be consecutive in either the memory or in the register file. The new commands are named Masked Load and Masked Store respectively.

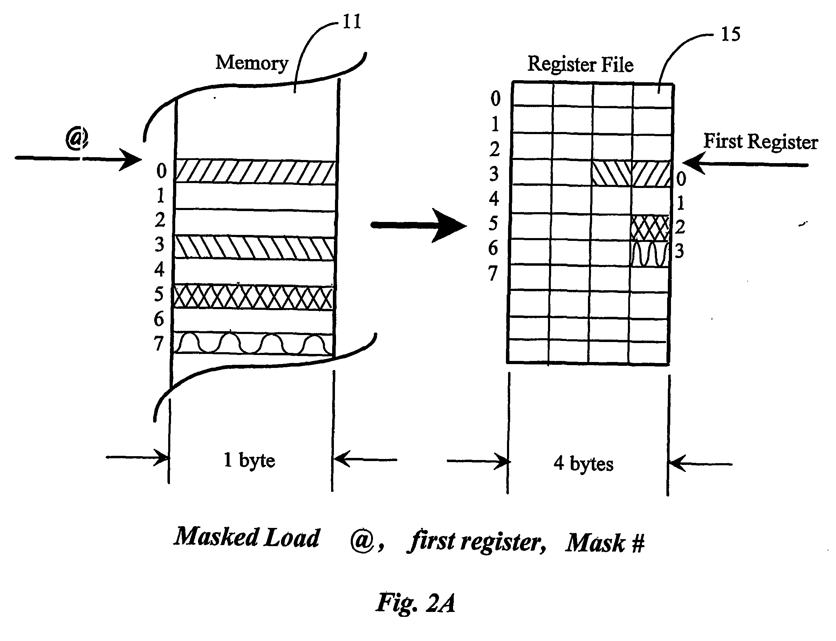

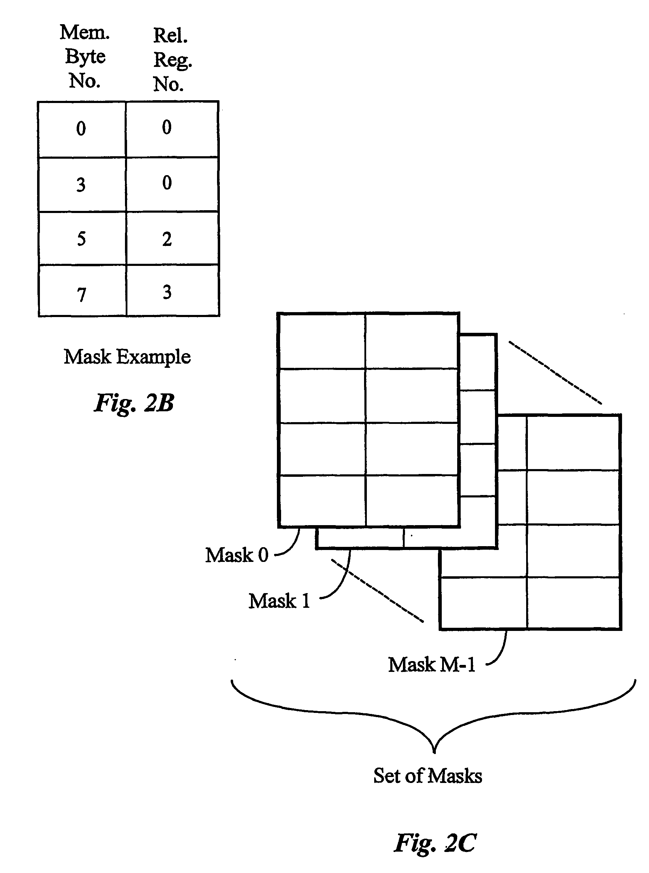

Fig. 2A is a schematic diagram of memory 11 and register file 15 illustrating an example of Masked Load. Memory 11 in this example is 1 byte wide, and 8 memory words are shown in memory 11, arbitrarily numbered 0 through 7. Each word has a memory address as is known in the art. Register file 15 in this example is 4 bytes wide, and is shown organized into registers arbitrarily numbered on the left from 0 to 7. Below the schematic is an example of the organization of a Masked Load instruction, having three arguments. A first argument is an address in memory 11, the second argument is a first register in the register file, and the third argument is now a mask number.

Fig. 2B illustrates a Mask example having two columns, the left-most column for memory byte number, as shown, and the right-most column for relative register number. This is the mask for the Masked Load example of Fig. 2A Note that memory byte numbers 0, 3, 5, and 7 are listed in the left-most column, and relative register numbers 0, 0, 2, and 3 are listed in the right-most column. The mask tells the Masked Load instruction which memory bytes to read, and where to write these bytes into the register file.

Referring again to Fig. 2A, note that relative memory bytes 0, 3, 5, and 7 are shaded (each differently). The address (@) argument of the Masked Load instruction tells the CPU where to position the mask in memory, and the mask selects the bytes to read relative to the starting address. Since the register file is four bytes wide, four bytes from memory can be written side-by-side in a single register of the register file. In this example the default is that selected bytes will be written into the register file beginning in the least significant byte of each register, which is, by default, the right-most byte in this example.

The mask says that relative memory byte number 0 is to go to relative register number 0. This is the first register indicated by the second argument of the instruction. Memory byte 0 is thus shown as written to the least significant byte of relative register 0 in the register file. The mask indicates next that relative memory byte 3 is also to be written to relative register 0 of the register file. Since this is the second byte to go to relative register 0, it is written to the second to the second least significant byte in the indicated register of the register file. Memory byte 5 is written to relative register 2, and since it is the only byte to go to register 2, it goes in the I. s. position. Relative memory byte 7 goes to relative register 3 according to the mask, and this is shown in Fig. 2A as well. The cross-hatching has been made common to illustrate the movement of data from the memory to the register file.

By default in this example data entities selected from memory are written to registers beginning at the least significant byte until a next entity is to be written to a different register. This is just one example of placement of selected bytes in registers. Any other placement may also be indicated by a mask, and the simple mask shown could have more columns indicating byte placement in registers. Many mask implementations and defaults are possible within the scope of the invention.

Just as illustrated above in the case of the Stream Load and Stream Store operations, the Masked Load operation has a matching Masked Store instruction as well. In the Store case, in the instruction architecture selected bits indicate the Store as opposed to Load operation, and the arguments have the same structure as for the Masked Load.

It will be apparent to the skilled artisan that the masks can be of arbitrary number in different embodiments of the invention, and the length of each mask, defining the number and position of bytes to be loaded, can vary in different embodiments as well. In one embodiment of the present invention the masks are useful in the situation discussed briefly above, that of processing data packets in routing machines. In this particular case the masks can be implemented to capture certain patterns of data entities from a memory, such as certain headers of packets for example, in processing data packets for routing.

Also in some embodiments of the present invention Masked Load and Masked Store instructions are used in threads (software) used for packet processing using dynamic multi-streaming processors. These processors have plural physical streams, each capable of supporting a separate thread, and each stream typically has a dedicated register file. In this case mask sets can be stored and dedicated to individual streams, or shared by two or more, or all streams. Such dynamic multi-streaming (DMS) processors are described in detail in the priority documents listed in the Cross-Reference to related documents above.

In a preferred embodiment masks are programmable, such that mask sets can be exchanged and amended as needed. Masks may be stored in a variety of ways. They may be stored and accessible from system memory for example, or in hidden registers on or off a processor, or in programmable ROM devices. In some embodiments facility is provided wherein masks may be linked, making larger masks, and providing an ability to amend masks without reprogramming. In one embodiment of the invention 32 masks are provided and up to 8 masks may be linked. In some cases masks may be stored in the instruction itself, if the instruction is of sufficient width to afford the bits needed for masking. If the instruction width is, for example, 64 bits, and only 32 bits are needed for the instruction itself, the other 32 bits may be a mask vector.

In the matter of programmability, masks may be programmed and/or amended in a variety of ways. Programming can be manual, in the sense of requiring human intervention, or amendable by dynamic action of the processing system using the masks. In the latter case, in application to DMS processors, there may be certain software burden, because, if one stream is using a mask or a set of masks in a load or store operation, it must be guaranteed that no other stream will update that mask or mask set. So in the case of DMS processors it is preferred that masks be dedicated to streams. In such a processor system, having *k* streams, there might be a mask or a set of masks dedicated to each of the *k* streams, such that a particular stream can only use and update its own mask or set of masks.

In the descriptions above, no particular distinction has been made to the memory source and destination of data entities for a Masked Load or a Masked Store operation. It is well known in the art, however, that state-of-the-art processors operate typically with cache memory rather than directly with system memory only. Cache memory and cache operations are notoriously well-known in the art, and need not be described in detail here.

In one embodiment of Masked Load and Store operations used with DMS processors according to the present invention, the masked load/stored could chose to bypass the cache (i.e. the access goes directly to the memory without consulting whether the required data resides in the cache), even if the memory access belongs to a cacheable space. Then, it is up to software to guarantee the coherency of the data. If the data cache is bypassed, the read/write ports to the data cache are freed for other accesses performed by the regular load/stores by other streams. Ports to caches are expensive.

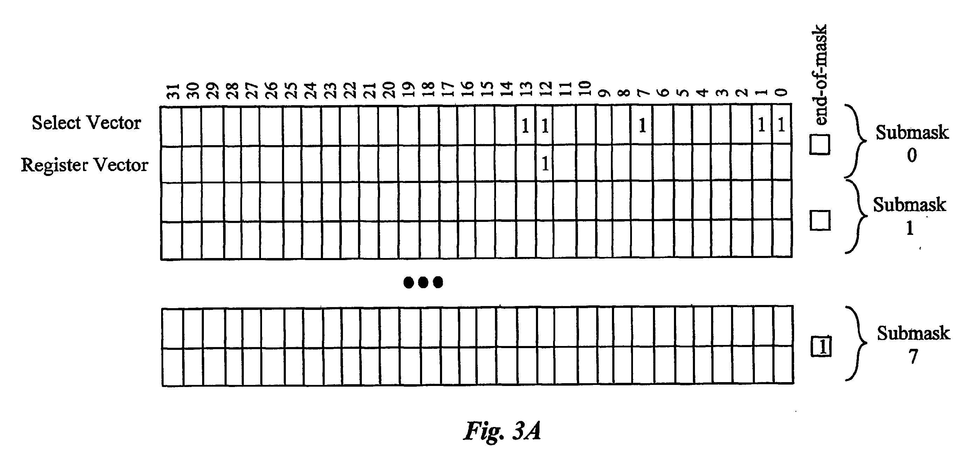

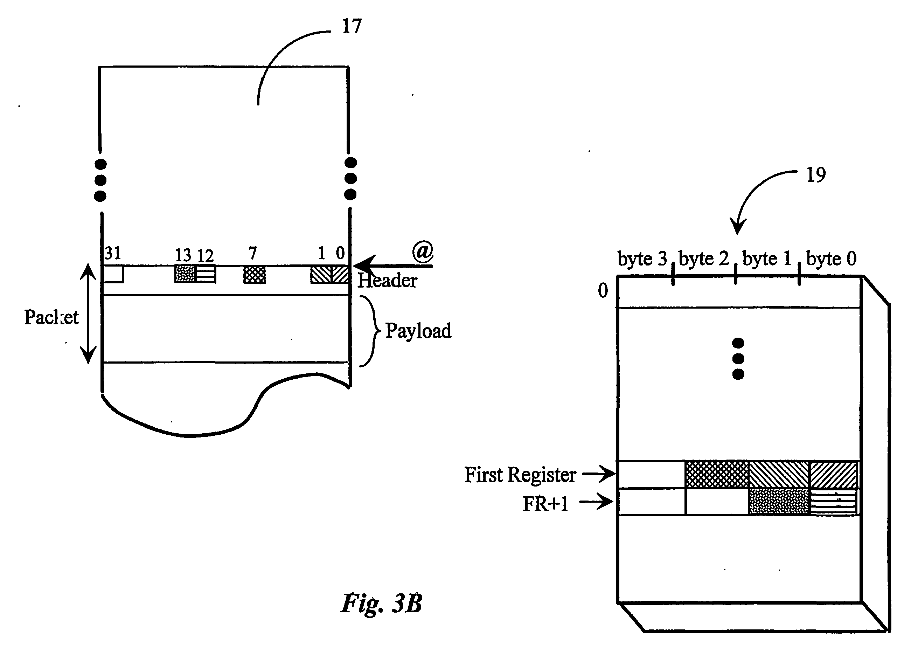

In a preferred embodiment of the invention masks (or in some cases parts of masks) are implemented as two vectors, each written and stored as a 32-bit word. Fig. 3A is an illustration of vector-masks, and Fig. 3B illustrates a memory 17 and a register file (context register) 19 wherein bytes from memory 17 are transferred into file 19 according to the vector-mask of Fig. 3A.

Referring now to Fig. 3A, in each submask there are two vectors, being a select vector and a register vector. A submask as illustrated in Fig. 3A may be a complete mask, and a complete mask may consist of up to eight (in this embodiment) submasks. This is described in more detail below.

Referring now to submask 0 in Fig. 3A, there are ones in bits 0, 1, 7, 12 and 13 in the Select vector. A one in any position in the select vector is to select a relative bit to be transferred from a memory to a register file. Other bits are zero. Of course the opposite could be true.

Referring now to Fig. 3B, memory 17 is organized as 32 bytes wide. In this example the application is packet processing, and the data entities manipulated are bytes from header fields for packets. As described before, the beginning position for selecting data entities is given in the Masked Load instruction as the first argument @ (for address, see Fig. 2A). The third argument provides the Mask number, which is, in this case the two-vector submask of Fig. 3A. The relevant bytes of the packet header stored in memory 17 and indicated as to-be-transferred by submask 0 of Fig. 3A are shown in memory 17 of Fig. 3B as shaded, each a different shading. This any combination or all of the bytes from the packet header of 32 bytes may be selected for transfer to a register file.

The Register vector of submask 0 indicates the relative position within the register file to write the selected bytes. Note there is a one in only one position in the Register vector in this particular example, that at position 12. The significance of the one in the register vector is to index the register wherein bytes are to be stored in the register file. There may in other examples be more than a single one in the register vector.

Referring now to Fig. 3B, bytes are stored in the register file beginning at a first register (FR). The first register for storage (start loading register) is the second argument of the Masked Load instruction. In other applications and embodiments there may be different defaults for different reasons. The Masked Load instruction in this example begins loading selected bytes from memory 17 into register file 19 at the first register and the default is to load in order from the least significant position, and adjacent, until the register is indexed by the register vector. Another order could well be used in another embodiment. Accordingly bytes 0, 1, and 7 are loaded into the first register from the right (l.s.). The one at position 12 in the Register vector of Fig. 3A indexes the register, so bytes 12 and 13 are loaded into the first two positions of register FR+1. As there are no more bytes from memory 17 selected, this is the end of the operation.

As described above and illustrated herein, submask 0 is a complete mask. In a preferred embodiment, however, up to eight submasks may be combined to make a mask. Each submask in this embodiment has an end-of-mask bit as indicated in Fig. 3B. A one in the end-of-mask bit indicates that submask is the-last submask to be combined to form the mask for a particular instruction.

It is emphasized that the example of vector masks described just above is a single example. Many other masking schemes are possible within the scope of the invention. For example, selection and placement could be indicated by a single vector wherein a first data entity indicated to be selected beginning at a first address would be copied to a first register, and one or more zeros between data entities to be selected would indicate an index in the register in which following entities are to be placed in the register file. Many such schemes are possible, and a relatively few are indicated by example herein.

It will be apparent to the skilled artisan that, just as described above in the case of Stream Load and Store instructions. Masked Store may be accomplished in much the same fashion as the Masked Load instruction described in detail.

In the store operations of the example, note that there are bytes of the register file to which data entities are not written. There is a choice of whether to leave these bytes or to clear them. In a preferred embodiment the unused bytes are cleared.

It will be apparent to the skilled artisan that there are many variations that may be made in the embodiments of the present invention described above without departing from the scope of the invention. For example, there are a wide variety of ways that masks may be structured and implemented, and a wide variety of ways that masks may be stored, programmed, exchanged, and amended. There are similarly a variety of ways Masked Load and Store instructions may be defined and implemented, depending on the Instruction Set Architecture used. There are similarly many applications for such unique instructions beyond the packet-processing applications used as examples herein, and the new instructions may be useful with many kinds of processors, including Dynamic Multi-Streaming (DMS) Processors, which are a particular interest of the present inventors.

In the matter of DMS processors, the present application is related to four cases teaching aspects of DMS processors and their functioning, all four of which are listed in the Cross-Reference section above. The use of the stream and masked load/store instructions as taught above are especially interesting in DMS processors, since the stream that executes the new instructions in a thread can remain inactive while the masked load/store instruction is being executed in a functional unit. Therefore, other streams can make use of the rest of the resources of the processor. The stream executing the new instructions does not need to sit idle until the masked load/store completes, however. That stream can go on and execute more instructions, as long as the instructions do not depend on the values in the registers affected by the masked load/store instruction in execution. In other words, the stream could execute instructions out-of-order.

In addition to the above, there is a wide choice of granularity in different embodiments of the invention. In the example used, bytes are selected, but in other embodiments the granularity may be bits, words, or even blocks of memory. If words are used, there need not be a register vector, if the register is of the same word width. It should further be noted that the Stream Load and Store operations are simply a particular case of the Masked Load and Store operations.

## Claims

1. In computer operation, a method for selecting data entities (13) from a memory (11) and writing the data entities (13) to a register file (15), comprising steps of:
consulting a first map of entities to copy relative to a first address;
selecting and reading entities indicated by the first map; and
consulting a second map of positions to write the entities copied from the memory (11), relative to a first register; and
writing the entities according to the second map.

2. The method of claim 1 wherein the steps follow from a Masked Load instruction implemented according to an instruction set architecture (ISA).

3. The method of claim 2 wherein the ISA is MIPS.

4. The method of claim 1 wherein said first address, said first register, and a mask number are designated by separate arguments of the single instruction.

5. The methods of claim 1 wherein the first and second maps are implemented as bit strings, wherein the position of bits in the string indicate the positions for data entities (13) to be selected from memory (11), and the registers to which data entities (13) are to be written.

6. The method of claim 5 wherein bit string maps are expressed as sub-masks, and sub masks are linkable in different combinations to provide combined masks.

7. The method of claim 2 wherein the execution of the Masked Load is performed in a Dynamic Multi-streaming (DMS) processor by a first stream running a first thread, and the first stream remains inactive while the Masked Load instruction is executed.

8. The method of claim 2 wherein the execution of the Masked Load is performed in a Dynamic Multi-streaming (DMS) processor by a first stream running a first thread, and the first stream executes instructions that do not depend on values in memory (11) affected by the Masked Load instruction while the Masked Load instruction is executed.

9. The method of claim 1, further comprising executing a plurality of individual streams in a dynamic multistreaming (DMS) processor, wherein individual masks are dedicated for exclusive use by individual ones of the plurality of individual streams.

10. In computer operation, a method for selecting data entities (13) from a register file (15) and writing the data entities (13) to a memory (11), comprising steps of:
consulting a first map of entities to read relative to a first register;
selecting and reading those the entities indicated by the first map;
consulting a second map of positions to write the entities read from the register file (15), relative to a first address; and
writing the entities to the memory according to the second map.

11. The method of claim 10 wherein the steps follow from a Masked Store instruction implemented according to an instruction set architecture (ISA).

12. The method of claim 11 wherein the ISA is MIPS.

13. The method of claim 10 wherein said first address, said first register, and a mask number are designated by separate arguments of the single instruction.

14. The method of claim 10 wherein the first and second maps are implemented as bit strings, wherein the position of bits in the string indicate the positions for data entities (13) to be read, and the registers to which data entities (13) are to be written.

15. The method of claim 14 wherein bit string maps are expressed as sub-masks, and sub masks are linkable in different combinations to provide combined masks.

16. The method of claim 11 wherein the execution of the Masked Store is performed in a Dynamic Multi-streaming (DMS) processor by a first stream running a first thread, and the first stream remains inactive while the Masked Store instruction is executed.

17. The method of claim 11 wherein the execution of the Masked Store is performed in a Dynamic Multi-streaming (DMS) processor by a first stream running a first thread, and the first stream executes instruction that do not depend on values in memory affected by the Masked Store instruction while the Masked Store instruction is executed.

18. The method of claim 10, further comprising executing a plurality of individual streams in a dynamic multistreaming (DMS) processor, wherein individual masks are dedicated for exclusive use by individual ones of the plurality of individual streams.

19. For use in computer operations, a Masked Load instruction comprising:
an indication of the instruction;
a first argument indicating an address in a memory (11);
a second argument indicating a first register in a register file (15); and
a third argument indicating a mask number indicating where a first map of a predetermined pattern of positions of data entities (13) to select from the memory (11) relative to the address and a second map of a pre-determined pattern of positions to write in the register file (15) relative to the first register are stored.

20. For use in computer operations, a Masked Store instruction comprising:
an indication of the instruction;
a first argument indicating a first register in a register file (15);
a second argument indicating an address in a memory (11); and
a third argument indicating a mask number designating where a first map of a predetermined pattern of positions of data entities (13) to select from the register file (15) relative to the first register and a second map of a pre-determined pattern of positions to write in the memory (11) relative to the address are stored.

21. A computing system comprising:
a CPU;
a memory (11); and
a register file (15);
wherein said CPU is configured to:
execute an instruction for loading data entities (13) from the memory (11) into the register file (15); and
in executing said instruction, select and read data entities (13) from the memory (11) according to a first map of a pre-determined pattern of positions relative to an address of the memory (11), and write the data entities (13) to the register file (15) according to a second map of a pre-determined pattern of positions relative to a first register of the register file (15).

22. The system of claim 21 wherein instruction is a Masked Load instruction implemented according to an instruction set architecture (ISA) and executed by the CPU.

23. The system of claim 22 wherein the ISA is MIPS.

24. The system of claim 21 wherein said address, said first register, and a mask number indicating where said first map and said second map are stored are designated by separate arguments of the single instruction.

25. The system of claim 24 wherein the stored masks are implemented as two bit string vectors, a first vector indicating which data entities (13) relative to the first address to read, and the second indicating into which registers relative to the first register to write the data entities (13).

26. The system of claim 25 wherein bit string maps are expressed as sub-masks, and sub masks are linkable in different combinations to provide combined masks.

27. The system of claim 22 wherein the execution of the Masked Load is performed in a Dynamic Multi-streaming (DMS) processor by a first stream running a first thread, and the first stream remains inactive while the Stream Load instruction is executed.

28. The system of claim 22 wherein the execution of the Masked Load is performed in a Dynamic Multi-streaming (DMS) processor by a first stream running a first thread, and the first stream executes instructions that do not depend on values in memory affected by the Masked Load instruction while the Masked Load instruction is executed.

29. The system of claim 21, further comprising executing a plurality of individual streams in a dynamic multistreaming (DMS) processor, wherein individual masks are dedicated for exclusive use by individual ones of the plurality of individual streams.

30. A computing system comprising:
a CPU;
a memory (11); and
a register file (15);
wherein said CPU is configured to:
execute an instruction for storing data entities (13) into the memory (11) from the register file (15); and
in executing said instruction, select and read data entities (13) from the register file (15) according to a first map of a pre-determined pattern of positions relative to a first register of the register file (15), and write the data entities (13) to the memory according to a second map of a pre-determined pattern of positions relative to an address of the memory (11).

31. The system of claim 30 wherein the instruction is a Masked Store instruction implemented according to an instruction set architecture (ISA) and executed by the CPU.

32. The system of claim 31 wherein the ISA is MIPS.

33. The system of claim 30 wherein said address, said first register, and a mask number indicating where said first map and said second map are stored are designated by separate arguments of the single instruction.

34. The system of claim 33 wherein the stored masks are implemented as two bit string vectors, a first vector indicating which data entities (13) relative to the first register to read, and the second indicating into which registers relative to the first address to write the data entities (13).

35. The system of claim 34 wherein bit string maps are expressed as sub-masks, and sub masks are linkable in different combinations to provide combined masks.

36. The system of claim 31 wherein the execution of the Masked Store Load is performed in a Dynamic Multi-streaming (DMS) processor by a first stream running a first thread, and the first stream remains inactive while the Stream Load instruction is executed.

37. The system of claim 31 wherein the execution of the Masked Store is performed in a Dynamic Multi-streaming (DMS) processor by a firs stream running a first thread, and the first stream executes instructions that do not depend on values in memory affected by the Masked Store instruction while the Masked Store instruction is executed.

38. The system of claim 30, further comprising executing a plurality of individual streams in a dynamic multistreaming (DMS) processor, wherein individual masks are dedicated for exclusive use by individual ones of the plurality of individual streams.

## Patentansprüche

1. Verfahren für den Computerbetrieb zum Wählen von Datenentitäten (13) aus einem Speicher (11) und zum Schreiben der Datenentitäten (13) in einen Registerspeicher (15), umfassend die Schritte:
das Auswerten einer ersten Zuordnungsvorschrift für Entitäten für einen Kopiervorgang relativ zu einer ersten Adresse;
das Wählen und Lesen von Entitäten, die durch die erste Zuordnungsvorschrift bezeichnet sind; und
das Auswerten einer zweiten Zuordnungsvorschrift für Positionen zum Schreiben der Entitäten, die aus dem Speicher (11) kopiert werden, relativ zu einem ersten Register; und
das Schreiben der Entitäten entsprechend der zweiten Zuordnungsvorschrift.

2. Verfahren nach Anspruch 1, worin die Schritte aus einem Masked-Load-Befehl hervorgehen, der gemäß einer Befehlssatz-Architektur (ISA) implementiert ist.

3. Verfahren nach Anspruch 2, worin die Befehlssatz-Architektur MIPS ist.

4. Verfahren nach Anspruch 1, worin die erste Adresse, das erste Register und eine Maskennummer durch getrennte Argumente des einzelnen Befehls angegeben werden.

5. Verfahren nach Anspruch 1, worin die erste und die zweite Zuordnungsvorschrift als Bitketten implementiert sind, und die Positionen von Bits in der Kette die Positionen für Datenentitäten (13) angeben, die aus dem Speicher (11) zu wählen sind, sowie der Register, in die die Datenentitäten (13) zu schreiben sind.

6. Verfahren nach Anspruch 5, worin die Bitketten-Zuordnungsvorschriften als Untermasken angegeben werden, und die Untermasken in verschiedenen Kombinationen verbunden werden können, um kombinierte Masken bereitzustellen.

7. Verfahren nach Anspruch 2, wobei das Ausführen des Masked-Load-Befehls in einem Dynamic Multi-streaming Prozessor (DMS) durch einen ersten Strom erfolgt, der einen ersten Abarbeitungslauf ausführt, und der erste Strom inaktiv bleibt, während der Masked-Load-Befehl ausgeführt wird.

8. Verfahren nach Anspruch 2, wobei das Ausführen des Masked-Load-Befehls in einem Dynamic Multi-streaming Prozessor (DMS) durch einen ersten Strom erfolgt, der einen ersten Abarbeitungslauf ausführt, und der erste Strom Befehle ausführt, die nicht von Werten im Speicher (11) abhängen, die von dem Masked-Load-Befehl beeinflusst werden, während der Masked-Load-Befehl ausgeführt wird.

9. Verfahren nach Anspruch 1, zudem umfassend das Ausführen einer Anzahl einzelner Ströme in einem Dynamic Multi-streaming Prozessor (DMS), wobei einzelne Masken für den ausschließlichen Gebrauch durch einzelne Ströme der Anzahl einzelner Ströme zugewiesen sind.

10. Verfahren für den Computerbetrieb zum Wählen von Datenentitäten (13) aus einem Registerspeicher (15) und zum Schreiben der Datenentitäten (13) in einen Speicher (11), umfassend die Schritte:
das Auswerten einer ersten Zuordnungsvorschrift für Entitäten zum Lesen relativ zu einem ersten Register;
das Wählen und Lesen derjenigen Entitäten, die durch die erste Zuordnungsvorschrift angegeben werden;
das Auswerten einer zweiten Zuordnungsvorschrift für Positionen zum Schreiben der aus dem Registerspeicher (15) gelesenen Entitäten relativ zu einer ersten Adresse; und
das Schreiben der Entitäten in den Speicher gemäß der zweiten Zuordnungsvorschrift.

11. Verfahren nach Anspruch 10, wobei die Schritte aus einem Masked-Store-Befehl hervorgehen, der gemäß einer Befehlssatz-Architektur (ISA) implementiert ist.

12. Verfahren nach Anspruch 11, worin die Befehlssatz-Architektur MIPS ist.

13. Verfahren nach Anspruch 10, worin die erste Adresse, das erste Register und eine Maskennummer durch getrennte Argumente des einzelnen Befehls angegeben werden.

14. Verfahren nach Anspruch 10, worin die erste und die zweite Zuordnungsvorschrift als Bitketten implementiert sind, und die Positionen von Bits in der Kette die Positionen für zu lesende Datenentitäten (13) angeben sowie für die Register, in die Datenentitäten (13) zu schreiben sind.

15. Verfahren nach Anspruch 14, worin die Bitketten-Zuordnungsvorschriften als Untermasken angegeben werden, und die Untermasken in verschiedenen Kombinationen verbunden werden können, um kombinierte Masken bereitzustellen.

16. Verfahren nach Anspruch 11, worin das Ausführen des Masked-Store-Befehls in einem Dynamic Multi-streaming Prozessor (DMS) durch einen ersten Strom erfolgt, der einen ersten Abarbeitungslauf ausführt, und der erste Strom inaktiv bleibt, während der Masked-Store-Befehl ausgeführt wird.

17. Verfahren nach Anspruch 11, worin das Ausführen des Masked-Store-Befehls in einem Dynamic Multi-streaming Prozessor (DMS) durch einen ersten Strom erfolgt, der einen ersten Abarbeitungslauf ausführt, und der erste Strom Befehle ausführt, die nicht von Werten im Speicher abhängen, die von dem Masked-Store-Befehl beeinflusst werden, während der Masked-Store-Befehl ausgeführt wird.

18. Verfahren nach Anspruch 10, zudem umfassend das Ausführen einer Anzahl einzelner Ströme in einem Dynamic Multi-streaming Prozessor (DMS), wobei einzelne Masken für den ausschließlichen Gebrauch durch einzelne Ströme der Anzahl einzelner Ströme zugewiesen sind.

19. Masked-Load-Befehl zum Gebrauch im Computerbetrieb, umfassend:
eine Angabe des Befehls;
ein erstes Argument, das eine Adresse in einem Speicher (11) bezeichnet;
ein zweites Argument, das ein erstes Register in einem Registerspeicher (15) bezeichnet; und
ein drittes Argument, das eine Maskennummer bezeichnet, die den Speicherort angibt, und zwar für eine erste Zuordnungsvorschrift mit einem vorbestimmten Muster von Positionen von Datenentitäten (13), die aus dem Speicher (11) relativ zu der Adresse zu wählen sind, und für eine zweite Zuordnungsvorschrift mit einem vorbestimmten Muster von Positionen für das Schreiben in den Registerspeicher (15) relativ zu dem ersten Register.

20. Masked-Store-Befehl zum Gebrauch im Computerbetrieb, umfassend:
eine Angabe des Befehls;
ein erstes Argument, das ein erstes Register in einem Registerspeicher (15) bezeichnet;
ein zweites Argument, das eine Adresse in einem Speicher (11) bezeichnet;
ein drittes Argument, das eine Maskennummer bezeichnet, die den Speicherort angibt, und zwar für eine erste Zuordnungsvorschrift mit einem vorbestimmten Muster von Positionen von Datenentitäten (13), die aus dem Registerspeicher (15) relativ zu dem ersten Register zu wählen sind, und für eine zweite Zuordnungsvorschrift mit einem vorbestimmten Muster von Positionen für das Schreiben in den Speicher (11) relativ zu der Adresse.

21. Computersystem, umfassend:
eine CPU;
einen Speicher (11); und
einen Registerspeicher (15),
wobei die CPU konfiguriert ist für:
das Ausführen eines Befehls zum Laden von Datenentitäten (13) aus dem Speicher (11) in den Registerspeicher (15); und
beim Ausführen des Befehls das Wählen und Lesen von Datenentitäten (13) aus dem Speicher (11) gemäß einer ersten Zuordnungsvorschrift mit einem vorbestimmten Muster an Positionen relativ zu einer Adresse des Speichers (11), und das Schreiben der Datenentitäten (13) in den Registerspeicher (15) gemäß einer zweiten Zuordnungsvorschrift mit einem vorbestimmten Muster an Positionen relativ zu einem ersten Register des Registerspeichers (15).

22. System nach Anspruch 21, wobei der Befehl ein Masked-Load-Befehl ist, der gemäß einer Befehlssatz-Architektur (ISA) implementiert ist und von der CPU ausgeführt wird.

23. System nach Anspruch 22, worin die Befehlssatz-Architektur MIPS ist.

24. System nach Anspruch 21, worin die Adresse, das erste Register und eine Maskennummer, die angibt, wo die erste Zuordnungsvorschrift und die zweite Zuordnungsvorschrift gespeichert sind, durch getrennte Argumente des einzelnen Befehls angegeben werden.

25. System nach Anspruch 24, worin die gespeicherten Masken als zwei Bitkettenvektoren implementiert sind, ein erster Vektor angibt, welche Datenentitäten (13) relativ zu der ersten Adresse zu lesen sind, und der zweite Vektor angibt, in welche Register relativ zu dem ersten Register die Datenentitäten (13) zu schreiben sind.

26. System nach Anspruch 25, worin die Bitketten-Zuordnungsvorschriften als Untermasken angegeben werden, und die Untermasken in verschiedenen Kombinationen verbunden werden können, um kombinierte Masken bereitzustellen.

27. System nach Anspruch 22, worin das Ausführen des Masked-Load-Befehls in einem Dynamic Multi-streaming Prozessor (DMS) durch einen ersten Strom erfolgt, der einen ersten Abarbeitungslauf ausführt, und der erste Strom inaktiv bleibt, während der Stream-Load-Befehl ausgeführt wird.

28. System nach Anspruch 22, worin das Ausführen des Masked-Load-Befehls in einem Dynamic Multi-streaming Prozessor (DMS) durch einen ersten Strom erfolgt, der einen ersten Abarbeitungslauf ausführt, und der erste Strom Befehle ausführt, die nicht von Werten im Speicher abhängen, die von dem Masked-Load-Befehl beeinflusst werden, während der Masked-Load-Befehl ausgeführt wird.

29. System nach Anspruch 21, zudem umfassend das Ausführen einer Anzahl einzelner Ströme in einem Dynamic Multi-streaming Prozessor (DMS), wobei einzelne Masken für den ausschließlichen Gebrauch durch einzelne Ströme der Anzahl einzelner Ströme zugewiesen sind.

30. Computersystem, umfassend:
eine CPU;
einen Speicher (11); und
einen Registerspeicher (15),
wobei die CPU konfiguriert ist für:
das Ausführen eines Befehls zum Speichern von Datenentitäten (13) aus dem Registerspeicher (15) in den Speicher (11); und
beim Ausführen des Befehls das Wählen und Lesen von Datenentitäten (13) aus dem Registerspeicher (15) gemäß einer ersten Zuordnungsvorschrift mit einem vorbestimmten Muster an Positionen relativ zu einem ersten Register des Registerspeichers (15), und das Schreiben der Datenentitäten (13) in den Speicher gemäß einer zweiten Zuordnungsvorschrift mit einem vorbestimmten Muster an Positionen relativ zu einer Adresse des Speichers (11).

31. System nach Anspruch 30, wobei der Befehl ein Masked-Store-Befehl ist, der gemäß einer Befehlssatz-Architektur (ISA) implementiert ist und von der CPU ausgeführt wird.

32. System nach Anspruch 31, worin die Befehlssatz-Architektur MIPS ist.

33. System nach Anspruch 30, worin die Adresse, das erste Register und eine Maskennummer, die angibt, wo die erste Zuordnungsvorschrift und die zweite Zuordnungsvorschrift gespeichert sind, durch getrennte Argumente des einzelnen Befehls angegeben werden.

34. System nach Anspruch 33, worin die gespeicherten Masken als zwei Bitkettenvektoren implementiert sind, ein erster Vektor angibt, welche Datenentitäten (13) relativ zu dem ersten Register zu lesen sind, und der zweite Vektor angibt, in welche Register relativ zu der ersten Adresse die Datenentitäten (13) zu schreiben sind.

35. System nach Anspruch 34, worin die Bitketten-Zuordnungsvorschriften als Untermasken angegeben werden, und die Untermasken in verschiedenen Kombinationen verbunden werden können, um kombinierte Masken bereitzustellen.

36. System nach Anspruch 31, worin das Ausführen des Masked-Store-Load-Befehls in einem Dynamic Multi-streaming Prozessor (DMS) durch einen ersten Strom erfolgt, der einen ersten Abarbeitungslauf ausführt, und der erste Strom inaktiv bleibt, während der Stream-Load-Befehl ausgeführt wird.

37. System nach Anspruch 31, worin das Ausführen des Masked-Store-Befehls in einem Dynamic Multi-streaming Prozessor (DMS) durch einen ersten Strom erfolgt, der einen ersten Abarbeitungslauf ausführt, und der erste Strom Befehle ausführt, die nicht von Werten im Speicher abhängen, die von dem Masked-Store-Befehl beeinflusst werden, während der Masked-Store-Befehl ausgeführt wird.

38. System nach Anspruch 30, zudem umfassend das Ausführen einer Anzahl einzelner Ströme in einem Dynamic Multi-streaming Prozessor (DMS), wobei einzelne Masken für den ausschließlichen Gebrauch durch einzelne Ströme der Anzahl einzelner Ströme zugewiesen sind.

## Revendications

1. Procédé, dans une opération d'ordinateur, pour sélectionner des entités de données (13) dans une mémoire (11) et écrire les entités de données (13) dans un fichier de registres (15), comprenant les étapes consistant à :
consulter une première carte d'entités à copier en relation avec une première adresse ;
sélectionner et lire les entités indiquées par la première carte ; et
consulter une deuxième carte de positions pour écrire les entités copiées à partir de la mémoire (11), en relation avec un premier registre ; et
écrire les entités conformément à la deuxième carte.

2. Procédé selon la revendication 1, dans lequel les étapes se suivent à partir d'une instruction de chargement masquée mise en oeuvre conformément à une architecture de jeu d'instructions (ISA).

3. Procédé selon la revendication 2, dans lequel l'architecture ISA est une architecture MIPS.

4. Procédé selon la revendication 1, dans lequel ladite première adresse, ledit premier registre et un numéro de masque sont désignés par des arguments séparés de l'instruction unique.

5. Procédé selon la revendication 1, dans lequel les première et deuxième cartes sont mises en oeuvre en tant que chaînes de bits, dans lequel les positions des bits dans la chaîne indiquent les positions pour les entités de données (13) à sélectionner dans la mémoire (11), et les registres dans lesquels les entités de données (13) doivent être écrites.

6. Procédé selon la revendication 5, dans lequel des cartes de chaînes de bits sont exprimées en tant que masques secondaires, et des masques secondaires peuvent être liés en différentes combinaisons pour réaliser des masques combinés.

7. Procédé selon la revendication 2, dans lequel l'exécution du chargement masqué est effectuée dans un processeur multiflot continu dynamique (DMS) par un premier flot exécutant un premier fil d'exécution, et le premier flot reste inactif alors que l'instruction de chargement masquée est exécutée.

8. Procédé selon la revendication 2, dans lequel l'exécution du chargement masqué est effectuée dans un processeur multiflot continu dynamique (DMS) par un premier flot exécutant un premier fil d'exécution et le premier flot exécute des instructions qui ne dépendent pas de valeurs dans la mémoire (11) affectées par l'instruction de chargement masquée alors que l'instruction de chargement masquée est exécutée.

9. Procédé selon la revendication 1, comprenant en outre l'exécution d'une pluralité de flots individuels dans un processeur multiflot continu dynamique (DMS) dans lequel des masques individuels sont dédiés à une utilisation exclusive par des flots individuels de la pluralité de flots individuels.

10. Procédé, dans une opération d'ordinateur, pour sélectionner des entités de données (13) dans un fichier de registres (15) et écrire les entités de données (13) dans une mémoire (11), comprenant les étapes consistant à :
consulter une première carte d'entités à lire en relation avec un premier registre ;
sélectionner et lire les entités indiquées par la première carte ;
consulter une deuxième carte de positions pour écrire les entités lues dans le fichier de registres (15), en relation avec une première adresse ; et
écrire les entités dans la mémoire conformément à la deuxième carte.

11. Procédé selon la revendication 10, dans lequel les étapes se suivent à partir d'une instruction de mémorisation masquée mise en oeuvre conformément à une architecture de jeu d'instructions (ISA).

12. Procédé selon la revendication 11, dans lequel l'architecture ISA est une architecture MIPS.

13. Procédé selon la revendication 10, dans lequel ladite première adresse, ledit premier registre et un numéro de masque sont désignés par des arguments séparés de l'instruction unique.

14. Procédé selon la revendication 10, dans lequel les première et deuxième cartes sont mises en oeuvre en tant que chaînes de bits, dans lequel les positions des bits dans la chaîne indiquent les positions pour les entités de données (13) à lire, et les registres dans lesquels les entités de données (13) doivent être écrites.

15. Procédé selon la revendication 14, dans lequel des cartes de chaînes de bits sont exprimées en tant que masques secondaires, et des masques secondaires peuvent être liés en différentes combinaisons pour réaliser des masques combinés.

16. Procédé selon la revendication 11, dans lequel l'exécution de la mémorisation masquée est effectuée dans un processeur multiflot continu dynamique (DMS) par un premier flot exécutant un premier fil d'exécution, et le premier flot reste inactif alors que l'instruction de mémorisation masquée est exécutée.

17. Procédé selon la revendication 11, dans lequel l'exécution de la mémorisation masquée est effectuée dans un processeur multiflot continu dynamique (DMS) par un premier flot exécutant un premier fil d'exécution, et le premier flot exécute des instructions qui ne dépendent pas de valeurs en mémoire affectées par l'instruction de mémorisation masquée alors que l'instruction de mémorisation masquée est exécutée.

18. Procédé selon la revendication 10, comprenant en outre l'exécution d'une pluralité de flots individuels dans un processeur multiflot continu dynamique (DMS), dans lequel des masques individuels sont dédiés à une utilisation exclusive par des flots individuels de la pluralité de flots individuels.

19. Instruction de chargement masquée, pour une utilisation dans des opérations d'ordinateur, comprenant :
une indication de l'instruction ;
un premier argument indiquant une adresse dans une mémoire (11) ;
un deuxième argument indiquant un premier registre dans un fichier de registres (15) ; et
un troisième argument indiquant un numéro de masque indiquant où une première carte d'un motif prédéterminé de positions d'entités de données (13) à sélectionner dans la mémoire (11) en relation avec l'adresse et une deuxième carte d'un motif prédéterminé de positions pour écrire dans le fichier de registres (15) en relation avec le premier registre sont mémorisées.

20. Instruction de mémorisation masquée, pour une utilisation dans des opérations d'ordinateur, comprenant :
une indication de l'instruction ;
un premier argument indiquant un premier registre dans un fichier de registres (15) ;
un deuxième argument indiquant une adresse dans une mémoire (11) ; et
un troisième argument indiquant un numéro de masque indiquant où une première carte d'un motif prédéterminé de positions d'entités de données (13) à sélectionner dans le fichier de registres (15) en relation avec le premier registre et une deuxième carte d'un motif prédéterminé de positions pour écrire dans la mémoire (11) en relation avec l'adresse sont mémorisées.

21. Système informatique comprenant :
une unité centrale ;
une mémoire (11) ; et
un fichier de registres (15) ;
dans lequel ladite unité centrale est configurée pour :
exécuter une instruction pour charger des entités de données (13) à partir de la mémoire (11) dans le fichier de registres (15) ; et
lors de l'exécution de ladite instruction, sélectionner et lire des entités de données (13) dans la mémoire (11) conformément à une première carte d'un motif prédéterminé de positions en relation avec une adresse de la mémoire (11), et écrire les entités de données (13) dans le fichier de registres (15) conformément à une deuxième carte d'un motif prédéterminé de positions en relation avec un premier registre du fichier de registres (15).

22. Système selon la revendication 21, dans lequel une instruction est une instruction de chargement masquée mise en oeuvre conformément à une architecture de jeu d'instructions (ISA) et exécutée par l'unité centrale.

23. Système selon la revendication 22, dans lequel l'architecture ISA est une architecture MIPS.

24. Système selon la revendication 21, dans lequel ladite adresse, ledit premier registre et un numéro de masque indiquant où ladite première carte et ladite deuxième carte sont mémorisées sont désignés par des arguments séparés de l'instruction unique.

25. Système selon la revendication 24, dans lequel les masques mémorisés sont mis en oeuvre en tant que deux vecteurs de chaîne de bits, un premier vecteur indiquant quelles entités de données (13) en relation avec la première adresse doivent être lues, et la deuxième indiquant dans quels registres en relation avec le premier registre les entités de données (13) doivent être écrites.

26. Système selon la revendication 25, dans lequel des cartes de chaînes de bits sont exprimées en tant que masques secondaires, et des masques secondaires peuvent être liés en différentes combinaisons pour réaliser des masques combinés.

27. Système selon la revendication 22, dans lequel l'exécution du chargement masqué est effectuée dans un processeur multiflot continu dynamique (DMS) par un premier flot exécutant un premier fil d'exécution, et le premier flot reste inactif alors que l'instruction de chargement de flot est exécutée.

28. Système selon la revendication 22, dans lequel l'exécution du chargement masqué est effectuée dans un processeur multiflot continu dynamique (DMS) par un premier flot exécutant un premier fil d'exécution, et le premier flot exécute des instructions qui ne dépendent pas de valeurs en mémoire affectées par l'instruction de chargement masquée alors que l'instruction de chargement masquée est exécutée.

29. Système selon la revendication 21, comprenant en outre l'exécution d'une pluralité de flots individuels dans un processeur multiflot continu dynamique (DMS), dans lequel des masques individuels sont dédiés à une utilisation exclusive par des flots individuels de la pluralité de flots individuels.

30. Système informatique comprenant :
une unité centrale ;
une mémoire (11) ; et
un fichier de registres (15) ;
dans lequel ladite unité centrale est configurée pour :
exécuter une instruction pour mémoriser des entités de données (13) dans la mémoire (11) à partir du fichier de registres (15) ; et
lors de l'exécution de ladite instruction, sélectionner et lire des entités de données (13) dans le fichier de registres (15) conformément à une première carte d'un motif prédéterminé de positions en relation avec un premier registre du fichier de registres (15), et écrire les entités de données (13) dans la mémoire conformément à une deuxième carte d'un motif prédéterminé de positions en relation avec une adresse de la mémoire (11).

31. Système selon la revendication 30, dans lequel l'instruction est une instruction de mémorisation masquée mise en oeuvre conformément à une architecture de jeu d'instructions (ISA) et exécutée par l'unité centrale.

32. Système selon la revendication 31, dans lequel l'architecture ISA est une architecture MIPS.

33. Système selon la revendication 30, dans lequel ladite adresse, ledit premier registre et un numéro de masque indiquant où ladite première carte et ladite deuxième carte sont mémorisées sont désignés par des arguments séparés de l'instruction unique.

34. Système selon la revendication 33, dans lequel les masques mémorisés sont mis en oeuvre en tant que deux vecteurs de chaîne de bits, un premier vecteur indiquant quelles entités de données (13) en relation avec le premier registre doivent être lues, et la deuxième indiquant dans quels registres en relation avec la première adresse les entités de données (13) doivent être écrites.

35. Système selon la revendication 34, dans lequel des cartes de chaînes de bits sont exprimées en tant que masques secondaires, et des masques secondaires peuvent être liés en différentes combinaisons pour réaliser des masques combinés.

36. Système selon la revendication 31, dans lequel l'exécution du chargement masqué/de la mémorisation masquée est effectuée dans un processeur multiflot continu dynamique (DMS) par un premier flot exécutant un premier fil d'exécution, et le premier flot reste inactif alors que l'instruction de chargement de flot est exécutée.

37. Système selon la revendication 31, dans lequel l'exécution du chargement masqué est effectuée dans un processeur multiflot continu dynamique (DMS) par un premier flot exécutant un premier fil d'exécution, et le premier flot exécute des instructions qui ne dépendent pas de valeurs en mémoire affectées par l'instruction de chargement masquée alors que l'instruction de chargement masquée est exécutée.

38. Système selon la revendication 30, comprenant en outre l'exécution d'une pluralité de flots individuels dans un processeur multiflot continu dynamique (DMS), dans lequel des masques individuels sont dédiés à une utilisation exclusive par des flots individuels de la pluralité de flots individuels.
